(19) Europäisches Patentamt / European Patent Office / Office européen des brevets

(11) **EP 2 814 203 B1**

(12) **EUROPEAN PATENT SPECIFICATION**

(45) Date of publication and mention
of the grant of the patent:
**28.11.2018 Bulletin 2018/48**

(21) Application number: **13305784.4**

(22) Date of filing: **11.06.2013**

(51) Int Cl.:
***H04L 12/24*** *(2006.01)*

(54) **Method for performing a failure analysis of a communication network**

Verfahren zur Durchführung einer Fehleranalyse eines Kommunikationsnetzwerks

Procédé permettant d'effectuer une analyse de défaillance d'un réseau de communication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.12.2014 Bulletin 2014/51**

(73) Proprietor: **Alcatel Lucent
91620 Nozay (FR)**

(72) Inventors:
• **Gemelli, Riccardo
20019 Settimo Milanese MI (IT)**
• **Paparella, Andrea
21052 Busto Arsizio VA (IT)**
• **Ronchetti, Luigi
22100 Como (IT)**

(74) Representative: **Nokia EPO representatives
Nokia Technologies Oy
Karaportti 3
02610 Espoo (FI)**

(56) References cited:
**US-A- 5 787 271       US-A1- 2006 174 154
US-B1- 7 564 805**

• **CHEN I ET AL: "Reliable Strict Quality-of-Service
with Unreserved Backup Paths", ADVANCED
NETWORKING AND APPLICATIONS, 2007. AINA
'07. 21ST INTERNATIONAL CONFERENCE ON,
IEEE, PI, 1 May 2007 (2007-05-01), pages 948-955,
XP031095398, DOI: 10.1109/AINA.2007.121 ISBN:
978-0-7695-2846-5**

## Description

## Technical field

The present invention generally relates to the field of communication networks. In particular, the present invention relates to a method for performing a failure analysis of a communication network (in particular, but not exclusively, an optical communication network). The present invention further relates to a computer program product configured to perform such method.

## Background art

It is known to use network design tools to provide a dimensioning of the network resources to be deployed in a communication network, on the basis of a set of service demands coming from the users of the communication network. The tool is typically used for dimensioning the network resources of a communication network prior to deploying and operating it, or for upgrading an existing communication network.

The wording "network resources" comprises resources of one or more layers of the ISO-OSI model, in particular resources of the so-called layer 0, i.e. transmission physical media and network equipment, which are the resources actually deployed on the field, and resources of the layer 1, such as network channels, which are supported by the layer 0 network resources. For instance, in an optical network, the network resources of layer 0 comprise the links between the nodes of the network, which are made by optical fibers, and network apparatuses such as regenerators, transponders, optical add-drop multiplexers, etc. Moreover, the network resources of layer 1 comprise the channels over each link, such channels being identified by the wavelengths propagating over the link and their bandwidths.

The network design procedure typically comprises the calculation of both working and backup paths by allocating channels for the transportation of data across the network. Typically, the tool gives some indications for the dimensioning of the physical transmission media and the network equipment that shall be deployed for allocating all the required channels. According to the service demands, the tool starts computing a working path for each demand and then applies some fault conditions (each comprising a single or multiple failures possibly interrupting the provisioning of the given service along the working path) in order to compute also backup paths which guarantee the provisioning of the service even in fault conditions.

In the following description and in the claims, the terms "fault" and "failure" will be used indifferently to indicate a condition within the communication network possibly interrupting the provisioning of at least one service demand. For instance, the term "failure" or "fault" will indicate breaking of a single link. The wording "failure combination" will indicate one or more failures occurring simultaneously.

As known, in operative conditions, a deployed communication network performs a set of functions which may be grouped into a data plane and a control plane. The data plane mainly comprises those tasks related to the data transmission and switching between the nodes of the communication network. The control plane "controls" the tasks of the data plane by implementing a routing protocol, which supports the advertisement of network topology information and available resource information between the nodes of the network, and a signaling protocol, which is responsible for actually reserving the resources within the communication network for the setup of working and backup paths. In operative conditions, working and backup paths are set up by the control plane of the communication network on the basis of the available network resources, which are provisioned according to the output of the network design tool described above.

In particular, current communication networks make use of the Generalized Multi-Protocol Label Switching (GMPLS) technology. The GMPLS provides for a control plane distributed among the nodes of the communication network. In other words, each node of a GMPLS communication network is provided with a control plane instance which sets up working and backup paths for the service demands it receives from the users of the communication network, according to the availability conditions of the deployed network resources at the time the service is to be provided. In particular, each control plane instance may implement a protection and/or restoration mechanism to set up backup paths. Backup paths may be protection paths, which are usually statically determined backup paths (they are actually determined by the design tool), and/or restoration paths, which are usually dynamically determined backup paths. For instance, according to the source based restoration (SRB) mechanism, a restoration path is automatically and dynamically determined by the control plane instance at the source node for a given service demand as soon as a failure is detected along the working or protection path allocated for such service. According to the protection and restoration combined (PRC) mechanism, a protection path is set up by the control plane for each service demand, so that the service demand may be re-routed along the protection path in case of failure along the working path, and restoration is additionally dynamically determined and provided in case of failure along the protection path.

US 7 564 805 B1 discloses a method that can include a plurality of activities that can include: via a capacity planning simulation, for a circuit affected by a failure scenario of a communication network: failing the affected circuit; and rendering an indication that a selected unaffected link has a maximum available capacity of at least a predetermined amount of capacity associated with the communication network being fully restorable.

Chen I. et al. "Reliable strict quality-of-service with unreserved backup paths", Advanced Networking and Applications, 2007, AINA'2007, 21st International Conference on, IEEE, 1 May 2007, pages 948-955, discloses an algorithm, AvoidPBO-S, that finds a backup path to use in the event that the reserved path fails. Resources are reserved on the backup path to provide the same strict QoS as before the failure.

US 5 787 271 A discloses an apparatus and method that is used to design a minimal spares network for a given communications network. Three data files are used as input which describe the communications network. The information comprising such data files include the number and configuration of the nodes and spans, the current demand in terms of the required capacity between the source and destination nodes, current spare capacity (if any), and optionally current paths used to carry the demand traffic (including the presence or absence of glass-throughs). A three pass method is used to design an efficient and economical spares network from the given input data. A simulated cut is performed on each span in the communications network. From each simulated span cut, the affected demand traffic is identified and rerouted via spare capacity that is 'purchased' on an incremental cost basis. Pre-purchased spares are used before new spares are purchased.

## Summary of the invention

The inventors noticed that, on the field, when the GMPLS control plane is implemented within a communication network, the network resources deployed according to the output of the design tool (indicated also as "nominal network resources") may not be sufficient for the restoration of all the service demands across the communication network.

Indeed, when the network design tool is applied for the computation of backup paths, it considers combinations of faults. For each combination, faults are considered as applying simultaneously or in a given sequence. At the output, for each combination of simultaneous or sequenced failures, the design tool provides a restoration path for each service whose working or protection path is broken and the network resource(s) that shall be assigned for provisioning that restoration path.

However, during operation of the network, the same combination of failures may occur in a sequence different from that considered during the design phase. Moreover, due to the distributed nature of the GMPLS control plane, each source node autonomously provides for the automatic set up of a restoration path when it detects a failure on the working or protection path(s) it originates. In case of multiple failures, the operations of failure detection and subsequent automatic set up of the restoration path at the source nodes originating the working or protection path(s) affected by the failures are not reciprocally synchronized. Hence, the order according to which the various restoration paths are set up is unpredictable. Hence, it may happen that the network resource that the design tool assigned for the restoration of the working or protection path of a first service, is instead used for the restoration of a second service whose working or protection path becomes failed before. The restoration mechanism implemented by the network for restoring the first service may then fail because the network resource(s) needed for provisioning the restoration path are unavailable, since they are already used by the restoration mechanism which restored the second service.

It is assumed here, for sake of example, that two failures F1, F2 are considered and that the tool provides for assigning, when the two failures apply simultaneously, a first resource R1 (e.g. a first channel or a first regenerator) for the restoration of a first service S1, and a second resource R2 (e.g. a second channel or a second regenerator) for the restoration of the second service S2. It is further assumed that, within the given network topology, the first resource R1 is in principle usable for the set up of the restoration paths for both the first service S1 and the second service S2, while the second resource R2 can be used for the restoration of the second service S2 only.

If the second service S2 is restored first (the second failure F2 being detected first) and the GMPLS control plane allocates the first resource R1 for this restoration, the first service S1, whose restoration starts later, can not actually be restored as it can not use the first resource R1. In cases like this, the first resource is shared between the two service demands for the first service S1 and the second service S2, and there is a conflict between the first service S1 and the second service S2 demands in using such shared resource. The conflict causes the missing restoration of one of the services, in this exemplary case the first service S1.

The behavior described above can not be established in advance since, as mentioned above, the various sources implement the GMPLS control plane in a not synchronized and unpredictable way, so that different possibilities exists to determine the restoration path for a given service demand on the basis of the sequence according to which restorations of different service demands are performed, such possibilities being not limited to those modeled by the network design tool. In other words, the order in which the service demands are restored can not be established in advance and taken into account by the network design tool. This leads to the fact that on the field the network resources provisioned according to the output of the network design tool may not be sufficient to guarantee the restoration of all the service demands across the communication network.

In principle, the problem above may be faced by considering all the fault conditions possibly occurring within the communication network by simulating each failure and combination of failures affecting the links and the nodes of the network. Every possible sequencing of restorations of the service demands affected by the failure or failure combination is also simulated. A user may then analyze each simulated fault condition and determine the necessary network resources for the restoration of all the service demands interrupted in the given fault condition. In particular, the user may then determine if the nominal network resources are sufficient or if additional network resources are needed. On the other hand, the procedure may determine a "worst case" after simulating the possible fault conditions, so that a user may determine the necessary provisioning of network resources for facing such a situation. Again, all the fault conditions shall be simulated to determine the worst case. A user may then analyze the worst case and determine the necessary network resources for the restoration of all the service demands interrupted in such a worst case situation.

In the first case, simulation is time consuming and complex. Indeed, considering a number NL of links that may be broken, a number C of faults possibly affecting the links and a number SD of service demands that, on the average, may be interrupted due to such faults, the number of different situations that have to be taken into consideration is equal to about:

$$\binom{NL}{C} \cdot SD!$$

where the binomial coefficient (NL, C) is the number of distinct combinations of C faults in a group of NL links and SD! is the number of different service restoration sequences for each fault combination. is apparent that, for a given network topology, the number above depends on the number of faults to be considered and the number of different sequences of possible restorations and may be very high. This makes a complete simulation almost impracticable.

In the second case, the worst case simulation and analysis is likewise time consuming and furthermore it may lead to provide the network with a set of network resources necessary for facing fault conditions that will never happen in reality or that will happen with very low probability. In this case, then, the set of network resources provisioned for facing the worst case may be unused for most of the time.

In view of the above, it is an object of the present invention to provide a method for performing a failure analysis of a communication network that overcomes the aforesaid drawbacks, in particular that allows to foresee potential conflicts between service demands in using the network resources when restoration is applied, without requiring the simulation of all the combination of failures affecting links and nodes of the network and, for each combination of failures, every possible sequencing of restorations of the service demands affected by that failure combination.

According to a first aspect, the present invention provides a computer-implemented method for performing a failure analysis of a communication network comprising a number of links and a number of nodes supporting transmission of a number of service demands, the method comprising performing a fault simulation by:

a) selecting a failure combination affecting the links and/or the nodes;
b) determining, amongst the number of service demands, one or more broken service demands affected by the failure combination and, amongst the links, one or more broken links affected by the failure combination;
c) computing a respective restoration path for each broken service demand, each of the restoration paths being computed by excluding the broken links;
d) amongst the broken service demands, determining whether at least two service demands have respective restoration paths that share a network resource over a conflicting link;
and, in the affirmative:
e) associating the shared network resource to one of the at least two service demands;
f) removing, from the broken service demands, the one of the at least two service demands to which the shared resource is associated and the service demands whose restoration paths do not share any network resource;
g) adding the conflicting link to the broken links; and
h) repeating steps c) to g) until a termination condition is fulfilled.

Preferably, at step c) computation of a restoration path is performed on the basis of a number of available channels over the links of the communication network.

Preferably, the termination condition comprises at step d) determining that no broken service demands have respective restoration paths sharing a network resource.

Preferably, at step e) each service demand of the at least two service demands whose restoration path is not assigned the shared network resource is put in a list of conflicting demands, and the termination condition comprises repeating steps c) to g) for a given number of times (N).

Preferably, at step e) each service demand of the at least two service demands whose restoration path is not assigned the shared network resource is put in a list of conflicting demands, and the termination condition comprises determining that a difference between the number of conflicting demands at a current repetition of steps c) to g) and the number of conflicting demands at a previous repetition of steps c) to g) is higher than a threshold.

Preferably, when the termination condition is fulfilled, the method further comprises:

a') amongst the conflicting demands, determining first conflicting service demands whose computed restoration paths comprises a first conflicting link;

b') amongst the conflicting demands, determining second conflicting service demands whose computed restoration paths comprises a second conflicting link;

c') given a number of first available network resources over the first conflicting link, determining first combinations of the first conflicting service demands that can be restored by using the first available network resources;

d') given a number of second available network resources over the second conflicting link, determining second combinations of the second conflicting service demands that can be restored by using the second available network resources;

e') computing selected combinations of conflicting service demands as a Cartesian product between said first combinations and said second combinations;

f) for each selected combination, determining all the possible sequencings of the conflicting service demands thereof;

g') for each sequencing of conflicting service demands, computing a set of restoration paths according to the sequencing.

Preferably, step c) further comprises assigning a wavelength to the computed restoration path and step d) comprises checking whether at least two service demands have respective restoration paths that share a wavelength over the conflicting link or over another link of the communication network.

Preferably, step c) further comprises checking whether the computed restoration path is optically feasible.

Preferably, checking whether the computed restoration path is optically feasible comprises checking whether, along the computed restoration path, an optical signal to noise ratio is higher than a given minimum optical signal to noise ratio, and/or a polarization mode dispersion is lower than a given maximum polarization mode dispersion, and/or a nonlinear effect is lower than a given maximum nonlinear effect.

Preferably, the failure combination is selected from a predetermined set of failure combinations and the method further comprises repeating steps a) to h) for each failure combination within the predetermined set of failure combinations.

Preferably, the communication network is an optical communication network.

More preferably, the optical communication network is a GMPLS network.

Preferably, the method comprises displaying at a hardware device, through a graphical user interface, information associated to the restoration paths computed at step c).

Preferably, the method comprises displaying at the hardware device, through the graphical user interface, a list of links of the communication network and, upon selection of one of the links by a user, displaying a list of failure combinations that do not affect the selected link, wherein the method further comprises performing steps a) to h) for each of the displayed failure combinations.

According to a second aspect, the present invention provides a computer program product comprising computer-executable instructions for performing, when the program is run on a computer, the steps of the method as set forth above.

## Brief description of the drawings

Embodiments of the invention will be better understood by reading the following detailed description, given by way of example and not of limitation, to be read with reference to the accompanying drawings, wherein:

- Figure 1 is a flow chart illustrating the steps of the method for performing a failure analysis according to the present invention;
- Figure 2 is a flow chart illustrating in more detail the step of fault simulation;
- Figure 3 is a flow chart illustrating in more detail the step of calculating conflicts in the flow chart of Figure 2;
- Figure 4 is a flow chart illustrating in more detail the step of forcing termination in the flow chart of Figure 3;
- Figures 5a and 5b schematically show exemplary windows of a graphical user interface; and
- Figures 6a and 6b schematically shows an optical communication network and a fault condition of the optical communication network.

## Detailed description of preferred embodiments of the invention

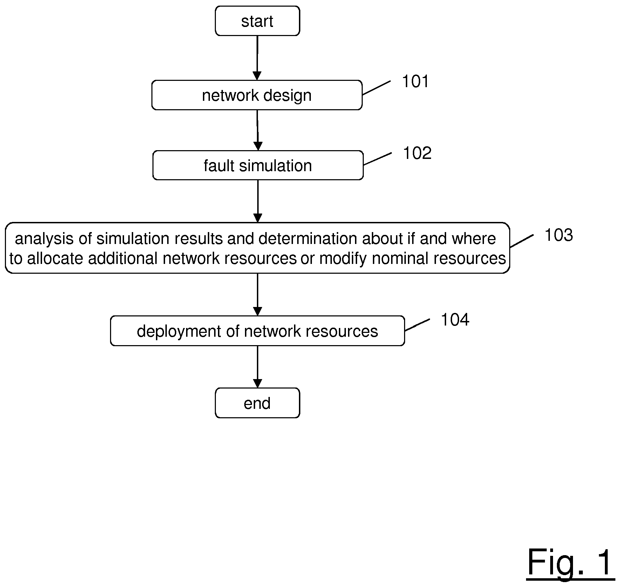

Figure 1 shows a flow chart illustrating a number of steps for designing and deploying a communication network, comprising the method for performing a failure analysis according to embodiments of the present invention.

Preferably, the communication network is an optical communication network. More preferably, the communication network is a wavelength division multiplexing (WDM) optical communication network. For instance, the optical communication network may support the optical fiber transmission of 88 WDM signals (i.e. 88 WDM channels) with 50 GHz spacing Preferably, the communication network implements the GMPLS technology.

Step 101 of Figure 1 comprises designing a set of network resources for the communication network, such network resources being the network resources that are needed for supporting a predefined set of service demands (also indicated as "nominal service demands") generated by users of the communication network. This step may be applied for dimensioning the network resources of a communication network prior to operating it, or for upgrading an existing communication network.

The operation of designing the network resources at step 101 is performed by a network operator using a network design tool. The network design tool is a software module which may be executed and stored on a dedicated hardware device, such as a personal computer. The device is also capable of generating a graphical user interface (GUI) supporting the network design tool, the GUI being suitable for displaying information relative to the network design in the form of graphic objects, such as windows, buttons and icons.

For each service demand, the network design tool computes a path across the communication network from a source node, where the service demand is generated, to a destination node, and provides a dimensioning of the physical transmission media and the network equipment necessary to route data along the path. Indeed, the computed path comprises a set of links connecting the nodes intermediate between the source node and the destination node and is allocated one or more channels along these links. The paths computed at step 101 comprise working paths and protection paths, as described above.

The path computation is preferably performed by implementing a path finding algorithm, such as the constrained shortest path first (CSPF) algorithm.

Step 101 of Figure 1 will not be described in greater detail since its implementation is known and it is not relevant for the present description.

The output of step 101 is a set of network resources needed to support the given service demands. For instance, given a predefined network topology (i.e. a predefined spatial configuration of network nodes and links) the output may be indicative of the allocated channels and of the network equipment at the network nodes, with the configuration thereof, necessary to route the allocated channels. In the following, the network resources comprised within this set will be indicated as "nominal network resources". Moreover the working and protection paths computed during step 101 will be indicated as "nominal paths".

Steps 102 and 103 implement the method for performing a failure analysis of the communication network, according to embodiments of the present invention.

In particular, at step 102, the method of the present invention provides for, on the basis of the network design output achieved at step 101, performing a fault simulation by computing restoration paths for circumventing a set of faults, according to embodiments of the method of the present invention. The operations of step 102 are preferably implemented through dedicated software module(s) cooperating with the network design tool and supported by the GUI, such module(s) being preferably stored and executed by the same device storing and executing the network design tool.

In particular, the operator may, for instance, select one of the following fault simulation modes:

i) simulate all the failure combinations possibly occurring into the communication network, on a failure combination by failure combination basis;

ii) simulate a reduced set of failure combinations (even a single failure) possibly occurring within the communication network, on a failure combination by failure combination basis; and

iii) on a link by link basis, simulate the failure combinations that may cause conflicts in the restoration of service demands along the considered link (as a matter of fact, these are the failure combinations that does not break the considered link).

In each fault simulation mode, restoration paths are computed for the service demands interrupted by the considered failure combinations.

Selection of one of the above fault simulation modes may be performed by the operator through the GUI.

At step 103, the method of the present invention provides for performing an analysis of the results of fault simulation, according to embodiments of the method of the present invention. Preferably, the analysis may be performed after fault simulation or in parallel with fault simulation, as it will be described in greater detail herein after. Also the operations of step 103 are preferably implemented through dedicated software module(s) cooperating with the network design tool and supported by the GUI, such module(s) being preferably stored and executed by the same device storing and executing the network design tool.

Results of fault simulation may be, in accordance with the selected fault simulation mode:

i) a list of failure combinations and, for each failure combination, a list of conflicting service demands (i.e. service demands that are conflicting on at least one link of their restoration paths across the communication network) and/or a list of conflicting links (i.e. links of restoration paths along which at least two service demands are conflicting). Such results may be visualized on a step-by-step basis, being the method for the fault simulation an iterative method, as it will be described in greater detail herein after;

ii) same as for above mode i); and

iii) a list of links and, for each link, a list of failure combinations that affect the provisioning of service demands along the link, and, for each of such failure combinations, the list of service demands whose restoration path comprises such link and which are conflicting along the link, as it will be described in greater detail herein after.

In particular, during step 103, the GUI may display the results of the fault simulation after it has been performed or while it is being performed.

On the basis of the results of the fault simulation, the operator, at the same step 103, may decide to add network resources to the nominal ones or modify the nominal network resources, in order to reduce the number of or avoid conflicts of service demands across the communication network.

At step 104, the network resources (the nominal network resources and the possible additional ones, or only the additional ones if the method is applied to an already existing communication network) are deployed in the communication network. This step may comprise an operation of modifying the nominal network resources in the communication network.

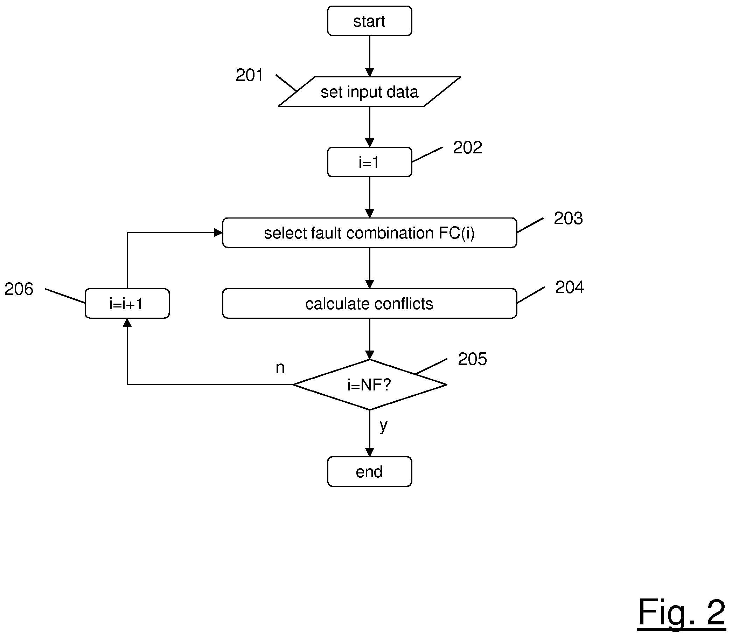

Figure 2 shows a flow chart illustrating in greater detail step 102 of Figure 1. At step 201 of the flow chart of Figure 2, the method provides for setting one or more input data for the fault simulation, on the basis of the outcomes of the network design at step 101. In particular, the input data, irrespective of the selected simulation mode, comprise one or more of the following data:

- information about the physical topology of the communication network (list of nodes, list of links, etc.);
- a list of ore or more failure combinations to be simulated;
- information about the network resources which may be used for the computation of restoration paths for the service demands interrupted by the considered failure combinations. In particular, these network resources preferably comprise a set of channels over each link of the communication network available for implementing the restoration paths. For instance, in a WDM system with 88 channels as described above, if 20 channels are used for the working or protection paths, 68 may be used for the restoration paths. The network resource information preferably comprises the number of available channels of each link and a wavelength associated to each available channel. The network resources may also comprise the regenerators that are used along the nominal paths computed by the network design tool;
- a maximum order N of restorations to be computed for each fault combination, as it will be described in detail herein after, and
- a convergence threshold ConvTh, in the form of an integer number indicative of a threshold above which the number of conflicting service demands is assumed to diverge, as it will be described in greater detail herein after.

The content of the input list of failure combinations to be simulated is chosen on the basis of the simulation mode. In particular, in mode i), the input list of failure combinations comprises the whole set of possible failure combinations occurring within the communication network. In mode ii), the input list of failure combinations comprises a selected set of possible failure combination, e.g. a set of failure combinations of interest for the network operator or for a user of the communication network. In mode iii), the input list of failure combinations comprises, for each considered link, a set of failure combinations that do not interrupt the link. In any case, it is assumed that the list of failure combinations to be simulated comprises NF failure combinations.

At steps 202-203 a first failure combination FC(1) is selected in order to start the fault simulation. At step 204 the method provides for calculating the possible conflicts along the restoration paths for the service demands interrupted under the conditions of failure combination FC(1), as it will be described in greater detail herein after. As it is represented by steps 205 and 206, the computation of the restoration paths and the possible conflicts is iterated by considering, at each iteration, a different failure combination FC(i) comprised within the input list of failure combinations to be simulated, until the last failure combination FC(NF) within the list (step 205) is taken into account.

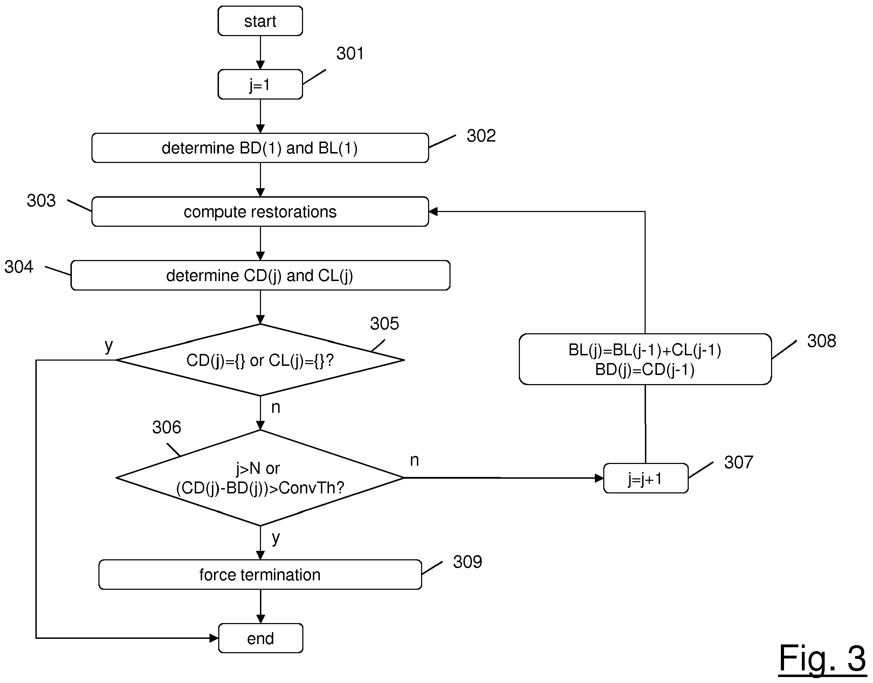

Figure 3 shows a flow chart illustrating in more detail step 204 of Figure 2. For each considered fault combination FC(i), step 204 comprises operations that are iterated according to an order j, which corresponds to an order of the computed restoration paths, as it will be clearer herein after.

At the first order (step 301), for each fault combination FC(i), the method provides for, at steps 301-302, determining a list BD(1) of service demands that are interrupted ("broken") due to the failure combination FC(i) and a list BL(1) of links that are interrupted ("broken") due to the failure combination FC(i).

Then, at step 303, the method provides for computing a set of restoration paths for restoring the broken service demands BD(1) avoiding the use of the broken links BL(1). Such computation is preferably performed by implementing a path finding algorithm on the basis of the network resource information. This algorithm is preferably the same path finding algorithm used at step 101 of Figure 1 for computing the nominal paths across the communication network, e.g. the constrained shortest path first (CSPF) algorithm.

In particular, at step 303, for each broken service demand of the list of broken service demands BD(1), the method provides for computing, by means of the path finding algorithm, a restoration path across the communication network. Each restoration path is computed independently from the others. In other words, the same available network resources are considered for each computed restoration path. Such implementation advantageously "simulates" the computation of a restoration path performed by a GMPLS control plane instance at a source node.

According to a first embodiment of the method of the present invention, at step 303, each restoration path is computed on the basis of the following network resource information:

- the number of available channels along each link of the communication network. At the first order, this number is less than or equal to the number of channels supported by the link minus the number of channels already allocated for the nominal paths over the link. Moreover, at the first order, the number of available channels includes the channels previously associated to the broken demands BD(1), which are made available for the restoration path computation.

At step 303 the method provides for returning both the restoration paths that actually might be set up (because they comprise available network resources, i.e. available channels) and the restoration paths that actually might not be set up (because of lack of at least one needed resource; this situation arises when, for instance, on one link of the restoration path no channels are available for restoration because, e.g., they are all allocated for the nominal paths). The former will be indicated as "successful restoration paths" while the latter will be indicated as "failed restoration paths".

Then, at the same step 303, the method provides for storing, in a path data structure, some information about the computed restoration paths, either successful or failed. In particular, such stored information comprise the list of links traversed by each restoration path, either successful or failed The restoration paths computed at this step will be indicated as first order restoration paths.

Then, at step 304, a list of conflicting demands CD(1) and a list of conflicting links CL(1) is determined.

The list of conflicting demands CD(1) is determined as follows: from the knowledge of the restoration paths computed at step 303, it is determined whether two or more restoration paths for the broken service demands share at least one available network resource (i.e. one available channel along a link). If two or more restoration paths share one available resource, it is determined that the shared resource is associated to the restoration path of one of such broken demands while the other service demand(s) whose restoration path(s) share that same network resource is(are) added to the list of conflicting demands CD(1). This situation may arise, for instance, when two restoration paths comprise a same link and the link has only one channel available for restoration.

Selection of the service demand to which the shared network resource is associated (i.e. the service demand which is not added to the list of conflicting demands CD(1)) may be performed on the basis of one or more of the following criteria:

- the selected service demand is the demand whose computed restoration path comprises the maximum number of hops; and
- the selected service demand is the demand whose restoration path comprises links having a lower number of available network resources (i.e. less available channels), not considering the link along which the service demands are conflicting.

The list of conflicting links CL(1) is determined by determining the links whose available network resource(s) is(are) shared between the restoration paths of one or more broken service demands. The conflicting links CL(1) are, in other words, links that, after the shared network resource is associated to one of the service demands, have no more available resources for restorations.

If, at step 305, the list of conflicting demands CD(1) or the list of conflicting links CL(1) is empty, the method provides for implementing steps 205-206 and considering another failure combination FC(i) within the set of failure combinations at the input of the fault simulation (step 201 of Figure 2). In this case, after step 305, the path data structure comprises a set of successful first order restoration paths in the form of groups of links traversed by each restoration path computed at step 303. Moreover, each restoration path is preferably associated with the service demand it is meant to restore, the failure combination it is meant to circumvent and the order j of restoration, i.e. 1.

If, at step 305, the list of conflicting demands CD(1) or the list of conflicting links CL(1) is not empty, the method provides for, at step 306, checking if the order j of restoration is equal to the maximum order N. Moreover, at the same step 306, the method provides for checking if the difference between the number of conflicting demands in the list CD(1) and the number of broken demands exceeds the convergence threshold ConvTh. If this difference exceeds the convergence threshold ConvTh, the number of conflicting demands is diverging.

If at least one of the two conditions above is not fulfilled, the operations at steps 303-306 are iterated. In particular, the order of restoration is increased by one (step 307) and the lists of broken links and broken demands are updated for the next order of restoration paths j+1 (step 308). More in particular, for the second order of restoration paths, the updated list of broken demands BD(2) consists of the conflicting demands CD(1) that have been determined at previous step 304 (i.e. the service demands that still have to be restored after the first iteration), and the updated list of broken links BL(2) comprises the broken links already comprised in the former list of broken links BL(1) and the conflicting links CL(1) that have been determined at previous step 304, which indeed are to be avoided in the successive computation of restoration paths because they lack available network resources. Moreover, at a step non shown in the flow chart of Figure 3, the method provides for updating also the network resource information to be used for the next restoration path computation. In particular, the network resource information is updated so as to comprise the number of channels on each link which are currently available for the restoration path computation. At this step, this number is computed so as not to comprise both the channels allocated for the nominal paths and the channels used for the successful first order restoration paths.

Then, steps 303 to 306 are repeated and restoration paths of second order are computed and stored in the path data structure, both successful restoration paths and failed restoration paths. Each restoration path is preferably associated with the service demand it is meant to restore, the failure combination it is meant to circumvent and the order j of restoration.

At each iterated step 304, the list of conflicting demands CD(j) is determined by first determining the service demands whose computed restoration paths share at least one available network resource. Then, the restoration path of one of such service demands is associated to the shared resource and the other service demands are added to the list of conflicting demands CD(j).

Selection of the service demand to which the shared network resource is associated (i.e. the service demand which is not added to the list of conflicting demands CD(j)) may be performed on the basis of one or more of the following criteria:

- the selected service demand is the demand whose computed restoration path comprises the maximum number of hops;
- the selected service demand is the demand whose restoration path comprises links having a lower number of available network resources (i.e. less available channels), not considering the link along which the service demands are conflicting; and
- the selected service demand is the demand for which the greatest number of restoration paths has already been computed (this number comprising the restoration path of the current order j and the restoration path of lower orders).

The list of conflicting links CL(j) is determined by determining the links whose available network resource(s) is(are) shared between restoration paths of order j, and that, in other words, after association of the shared network resource to a service demand, have no more available resources for restorations.

According to the method of the present invention, for each failure combination FC(i) the order j of restoration is incremented and steps 303 to 306 are repeated until at least one of the conditions at step 305 is fulfilled or, if the conditions at step 305 are both not satisfied, until at least one of the conditions at step 306 is fulfilled. At each iteration, restoration paths of j-th order are computed by considering a number of available channels over each link equal to the number of available channels considered at the previous iteration minus the number of channels used for the successful restoration paths of order j-1. Then, the computed restoration path of j-th order are stored in the path data structure, both successful restoration paths and failed restoration paths.

At iterated step 306, it is checked if the current order j is higher than the maximum order N or if the difference between the number of conflicting demands in the current list CD(j) and the number of conflicting demands in the previous list CD(j-1) exceeds the convergence threshold ConvTh. If at least one of the above conditions is satisfied, the method provides for forcing termination of the iterations of steps 303-306 (step 309).

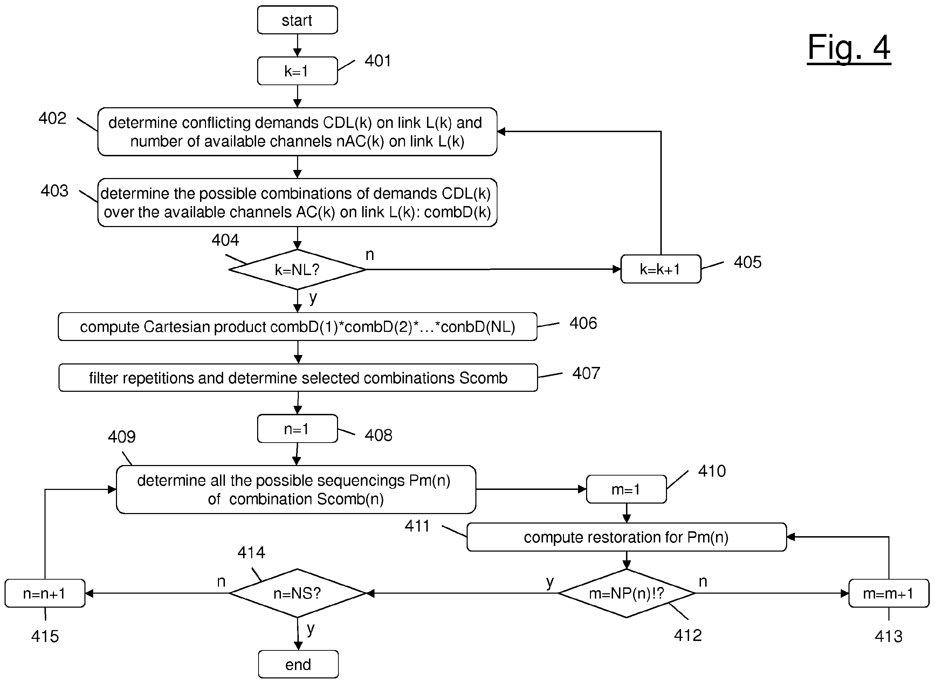

Step 309 is described in detail by the flow-chart of Figure 4. It is assumed that, at the current order j of restoration paths, the list of conflicting links CL(j) comprises NL links.

For each link L(k), k=1, ..., NL within the list of conflicting links CL(j) (step 401, 404 and 405), the method provides for determining the conflicting service demands CDL(k) over the link L(k), and the number of available channels over the link L(k) (step 402). Then, at step 403, the method provides for determining all the possible distinct combinations combD(k) of the conflicting service demands CDL(k) over the available channels of the link L(k). For instance, if the conflicting service demands CDL(k) comprise three service demands D1, D2, D3 and the number of available channels over the link L(k) is 2, the following combinations are determined: (D1, D2), (D1, D3), (D2, D3). The number of different combinations is equal to a binomial coefficient indexed by the number of conflicting demands over the link and the number of available channels.

Steps 402 and 403 are repeated for each link L(k) of the list of conflicting links CL(j) at the current order of restoration paths.

Once all the links have been taken into account (step 404, condition k=NL fulfilled), at step 406 the method provides for computing the Cartesian product of the combination sets combD(1), combD(2), ..., combD(NL) of service demands conflicting over the links L(1), L(2), ..., L(NL) comprised within the list of conflicting links CL(j). This computation is performed by eliminating repetitions of service demands. The Cartesian product gives the possible combinations of conflicting service demands over all the conflicting links. Further, at step 407, the combinations of the Cartesian product are filtered for eliminating possible repetitions of combinations and a list of selected combinations Scomb of the conflicting service demands over the conflicting links is determined. The number of selected combinations will be indicated as NS and the selected combinations as Scomb(1), Scomb(2), ..., Scomb(NS).

For sake of example, it is assumed that 3 service demands D1, D2, D4 are conflicting over link L(1) and the number of available channels over the link L(1) is 2, while 4 service demands D1, D2, D3, D5 are conflicting over link L(2) and the number of available channels over the link L(2) is 2. A number of 3 different combinations are determined for link L(1), and listed in the following table, where each row corresponds to one combination and the "x" marks the service demands of each combination:

| link | D1 | D2 | D3 | D4 | D5 |
|------|----|----|----|----|----|
|      |    | x  |    | x  |    |
| L(1) | x  |    |    | x  |    |
|      | x  | x  |    |    |    |

A number of 6 different combinations are determined for link L(2) and listed in the following table:

| link | D1 | D2 | D3 | D4 | D5 |
|------|----|----|----|----|----|
|      |    |    | x  |    | x  |
|      |    | x  |    |    | x  |
| L(2) | x  |    |    |    | x  |
|      |    | x  | x  |    |    |
|      | x  |    | x  |    |    |
|      | X  | X  |    |    |    |

The Cartesian product of the above combinations for link L(1) and L(2), followed by filtering, gives 14 selected different combinations which are listed in the following table:

| link | D1 | D2 | D3 | D4 | D5 |
|---|---|---|---|---|---|
| | | x | x | X | X |
| | X | | X | X | X |
| | X | X | X | | X |
| | | X | | X | X |
| | X | X | | X | X |
| | X | X | | | X |
| | X | | | X | X |
| L(1), L(2) | X | X | | | X |
| | | X | X | X | |
| | X | X | X | X | |
| | X | X | X | | |
| | X | | X | X | |
| | X | X | | X | |
| | X | X | | | |

Then, for each possible selected combination Scomb(n), n=1, ..., NS (steps 408, 414 and 415), the method provides for, at step 409, determine all the possible different sequencings of the service demands of the selected combination Scomb(n). If the selected combination comprises a number NP(n) of demands, the number of different sequencings is NP(n)!. Then, for each possible selected combination Scomb(n), n=1, ..., NS, the method provides for computing a set of restoration paths for restoring the service demands of the selected combination Scomb(n) according to each possible sequencing Pm(n), m=1, ..., NP(n)! (steps 410 to 412). Computation of the restoration paths is preferably performed by implementing the same path finding algorithm considered at step 303 of Figure 3, e.g. the CSPF path finding algorithm. The network resource information at the input of the path finding algorithm comprises, at each iterated step 411, a number of available channels over each link which is equal to the number of available channels considered at the previous iteration minus a number of channels allocated for the successful restoration paths computed at the previous iterations. This way, restoration paths are computed by taking into account possible different sequencings of the service demands over the conflicting links, given the available network resources over that links.

The restoration paths computed at iterated step 411 are stored in the path data structure, together with the restoration paths computed at iterated step 303 of Figure 3 for the restorations of order 1, 2, ..., N. Within the path data structure, each restoration path is in the form of the list of links traversed by the path. Moreover, each restoration path is preferably associated to:

- the service demand it is meant to restore (either successfully or not);
- the fault combination it is meant to circumvent; and
- the order of restoration, corresponding to index j of iterated step 303 of Figure 3 at which the restoration path is computed. The restoration paths computed at iterated step 411 of Figure 4 are associated to order N+1.

Advantageously, according to the method of the present invention, the fault simulation is less time consuming than a simulation according to the known procedures described above. Indeed, with reference to the exemplary situation described above for illustrating the flow chart of Figure 4, a full enumeration of all the possible sequencings of service demands over the conflicting links L(1), L(2) would imply that a number of 3x6x4!=432 computations by the CSPF algorithm shall be performed. Indeed, as listed in the tables above, link L(1) may carry 3 possible combinations of 2 service demands, link L(2) may carry 6 possible combinations of 2 service demands, so that, over the two links together, 3x6 combinations of 4 service demands are possible, and the number of different sequencings for each combination is 4! (indeed, the number of possible sequencings of service demands is the factorial of the number of service demands). With the method of the present invention, redundant combinations are filtered away. Indeed, as listed in the last table above, over the two links L(1), L(2) together, the filtered combinations comprise 5 combinations of 4 service demands, 8 combinations of 3 service demands and 1 combination of 2 service demands. Hence, thanks to filtering, a number of 5x4!+8x3!+1x2!=170 computations is actually to be performed, which number is significantly lower than when full enumeration is considered.

According to a second embodiment of the method of the present invention, the method still comprises steps 301-309 of the flowchart of Figure 3 and steps 401-415 of the flowchart of Figure 4, which have been described above. However, according to the second embodiment, at iterated steps 303 of Figure 3 and 411 of Figure 4, each restoration path is determined on the basis of the following network resources information:

1. the number of available channels along each link of the communication network; and
2. the wavelength associated to each available channel.

In particular, according to this second embodiment, at iterated step 303, the method provides for computing, by means of the path finding algorithm, a restoration path on the basis of the number of the available channels over each link, and for assigning a wavelength to be used for such a restoration path.
Then, the method provides for returning, for each restoration path of order j, the list of links traversed by the path together with the wavelength assigned to the restoration path.
The wavelength assignment may be performed together with or after the computation performed by the path finding algorithm. The assigned wavelength is preferably selected according to one or more of the following constraints:

- the assigned wavelength is the same over all the links comprised in the restoration path, and may be the same wavelength assigned by the network design tool to the nominal path of the considered broken service demand;
- the assigned wavelength, for each service demand, may be selected as a wavelength that it is not already assigned to any nominal path sharing at least one link with the currently computed restoration path; and
- if a conflict is detected along a link of the currently computed restoration path as described above, the assigned wavelength is a wavelength that it is not already assigned to any nominal path or successful restoration path of lower order along any other link of the currently computed restoration path, i.e. along the links of the restoration path except the link over which the conflict is detected.

Then, preferably, a check is made whether along the restoration path (comprising the links over which conflicts are detected) the assigned wavelength is already used for a nominal path or a successful restoration path of lower order. Finally, the restoration paths are stored in the path data structure together with an information indicative of whether over at least one link along the currently computed restoration path the wavelength allocated for the current restoration has been already used for a nominal path or a successful restoration path.
At each iteration, the network resource information at the input of the path finding algorithm preferably comprises information about the number of available channels on each link and also about the wavelengths of these channels, so that wavelengths already allocated for nominal paths and successful restoration paths of lower order j-1 may be avoided when the restoration paths of the current order j are computed.
At iterated step 411, the same check described above is made for the restoration paths computed for restoring the service demands of each selected combination Scomb(n), n=1, ..., NS according to each possible sequencing Pm(n), m=1, ..., NP(n)!. Again, each restoration path stored within the path data structure after each step 411 comprises an information indicative of whether over at least one link used along the restoration path the wavelength allocated for the restoration has been already used for another nominal/restoration path.
According to an advantageous variant, which may be applied both to the first embodiment and the second embodiment of the method of the present invention, at iterated steps 303 and 411, after computation of a restoration path, a check is added in order to establish if the restoration path is optically feasible, i.e. if the restoration path exceeds the optical reach for the optical signal propagating along the path. The optical reach is the maximum distance an optical signal can propagate without any optical/electrical/optical (O/E/O) regeneration. For determining if the restoration path exceeds the optical reach, the method of the present invention provides for determining one or more of the following parameters associated to the propagation of an optical signal along the considered restoration path: optical signal to noise ratio (OSNR), polarization mode dispersion (PMD) and nonlinear effect (NLE). If the optical signal to noise ratio is higher than a given minimum optical signal to noise ratio, and/or the polarization mode dispersion is lower than a given maximum polarization mode dispersion, and/or the nonlinear effect is lower than a given maximum nonlinear effect, then the method of the present invention provides for determining that the restoration path is optically feasible.
According to this advantageous variant, each restoration path is then stored in the path data structure together with an information indicating whether the restoration path is optically feasible or not.
As described above, according to the method of the present invention, the analysis of step 103 of the flow chart of Figure 1 may be performed nearly simultaneously with the fault simulation of step 102.
As already described, both the fault simulation and the analysis are preferably implemented in combination with the GUI on a dedicated hardware equipped with an input module, such as a keyboard and/or a mouse, and an output device, such as a monitor, through which a user may interact with both the fault simulation and the analysis according to one of the simulation modes i)-iii) described above. In particular, the user may set the input data for the fault simulation, visualize, order and analyze the results of the fault simulation and decide, during the analysis, if and where to allocate additional network resources in order to react to fault conditions. In the following, operations that may be performed by applying the method of the present invention will be recalled by describing an exemplary GUI that may be exploited by a user to implement the method.

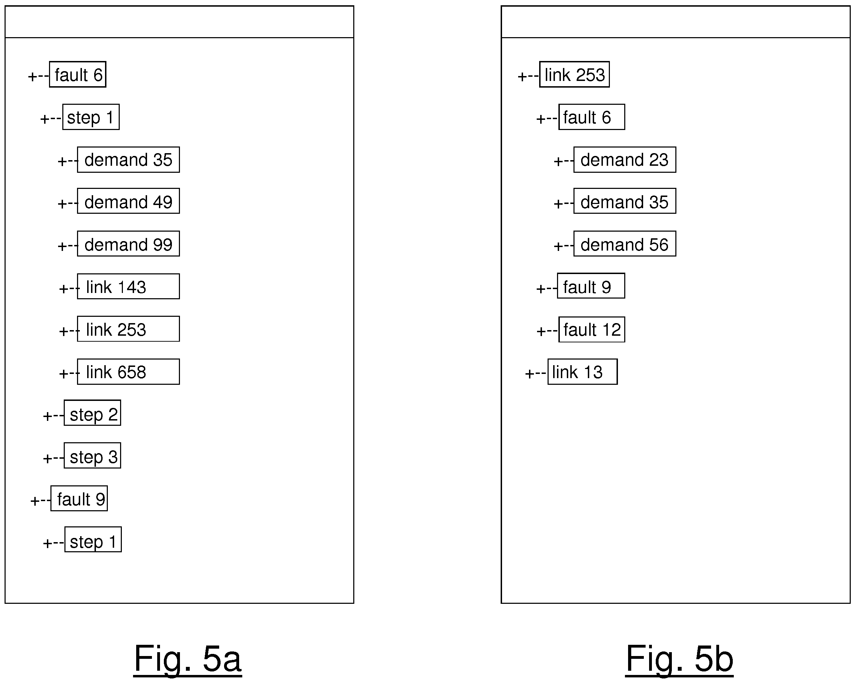

Figure 5a, shows an exemplary window displayed by the GUI when in case the fault simulation mode i) or ii) is implemented. In this case indeed the user may follow the sequence of operations listed below:

1. the user may determine one or more failure combinations to be simulated (the simulation mode i provides for simulating all the possible failure combinations), which may be displayed on the GUI through respective graphic objects such as buttons, each indicative of a failure combination ("fault 6", "fault 9" in Figure 5a);

2. the user may select a failure combination and activate the operations relative to fault simulation described above with reference to step 204 of the flow chart of Figure 2; selection may be performed by selecting the respective graphic object (e.g. clicking on the respective button) in the GUI: for instance, with reference to Figure 5a, the user may click on the button "fault 6" for activating the operation of fault simulation with respect of the specific failure combination identified by that button;

3. during the fault simulation, the data of the path data structure (order of restoration paths, conflicting service demands and conflicting links for each order, etc.) are collected; at the end of the fault simulation, they may be uploaded and displayed on the GUI as shown in Figure 5a: each time an order j of restoration paths is computed, a graphic object, e.g. a button, indicative of this order is displayed ("step 1"); by selecting this graphic object, e.g. by clicking on this button, the user may upload and visualize, possibly in the form of further graphic objects such as further buttons, a list of conflicting demands ("demand 35", "demand 49", "demand 99") and a list of conflicting links ("link 143", "link 253", "link 658"). Selecting the graphic object indicative of a service demand (e.g. clicking on the corresponding button) may upload and display a list of the links traversed by the computed restoration path for that service demand.

It is appreciated that, as shown in Figure 5a, the GUI may be organized and used with a defined ordering (faults, order of restoration paths, conflicting demands and links) which reflects the order of the operations performed during fault simulation.

Figure 5b, shows an exemplary window displayed by the GUI in case the fault simulation mode iii) is implemented. In this case indeed the user may follow the sequence of operations listed below,:

1. the user may set one or more links of interest, e.g. one or more links having less available network resources (i.e. less available channels). Such links may be displayed on the GUI by means of respective graphic objects such as buttons ("link 253", "link 13" in Figure 5b);

2. for each of those links, the list of failure combinations that does not break the selected links is available to the user and it may be displayed on the GUI by respective further graphic objects such as buttons ("fault 6", "fault 9", "fault 12" in Figure 5b);

2.1 the user may select a failure combination and activate the operations relative to fault simulation described above with reference to step 204 of the flow chart of Figure 2. Selection may be performed by selecting the respective graphic object, e.g. by clicking on the respective button, in the GUI: for instance, with reference to Figure 5b, the user may click on button "fault 6" for activating the operation of fault simulation with respect of the specific failure combination identified by that button. At the end of fault simulation, results are uploaded from the path data structure (and displayed in correspondence of the graphic object indicative of the failure combination) in terms of data indicative of:

- the order of restoration at which at least two service demands are conflicting over the selected link due to the considered fault combination;
- the number of available channels over the selected link;
- the number of wavelengths that may be assigned to restoration paths over the selected link; notwithstanding the fact that each channel is associated to a different wavelength, the number of available wavelengths may be different from the number of available channels since a wavelength may be already used for another nominal/restoration path on another link; and
- the number of conflicting service demands over the selected link;

Moreover, the list of conflicting demands may be uploaded and displayed on the GUI through respective graphic objects such as buttons ("demand 23", "demand 35", demand 56" in Figure 5b). By selecting one of these graphic objects, the user may visualize:

- data indicating whether the selected demand has a restoration path that is optical feasible; and/or
- data indicating whether assigned wavelength has not already been assigned to another nominal/restoration path; and/or
- the list of links traversed by the restoration path computed for the selected service demand.

The links may be ordered according to a user selectable parameter, e.g. the number of resources available on the link or a probability of failure of the link. In the former case, the user may focus his attention on links that have a lower amount of available resources for restorations, which are more likely to cause conflicts. In the latter case, the user may focus on links having a higher failure probability so as to avoid adding resources for circumventing failures that are less probable.

The description above about the interaction between a user an the GUI is merely exemplary. Indeed, the GUI may be merely an instrument for visualizing the results of the fault simulation, possibly in a selected order of visualization (e.g. faults, order of restoration paths, conflicting service demand and links as in Figure 5a, or links, faults, conflicting service demands as in Figure 5b), and the operations described above may be performed in a completely automatic manner, without the user having to select graphical objects in the GUI for activating the fault simulation or visualizing results for the analysis.

As already described above, on the basis of the analysis, the user may decide to intervene by adding the necessary network resources to or modifying the nominal network resources (or the network resources already deployed in an existing communication network) to reduce or avoid the effects of failures on service demands. Examples of possible interventions in an optical communication network are:

- addition of an optical fiber;
- addition of an optical regenerator, able to regenerate the optical signal but also, possibly, to recolor (i.e. changing the wavelength of) the optical signal; and
- modification of the optical add-drop multiplexers at the nodes of the optical communication network, e.g. replacement of a colored optical add-drop multiplexer with a colorless one, or replacement of a directioned optical add-drop multiplexer with a directionless one.

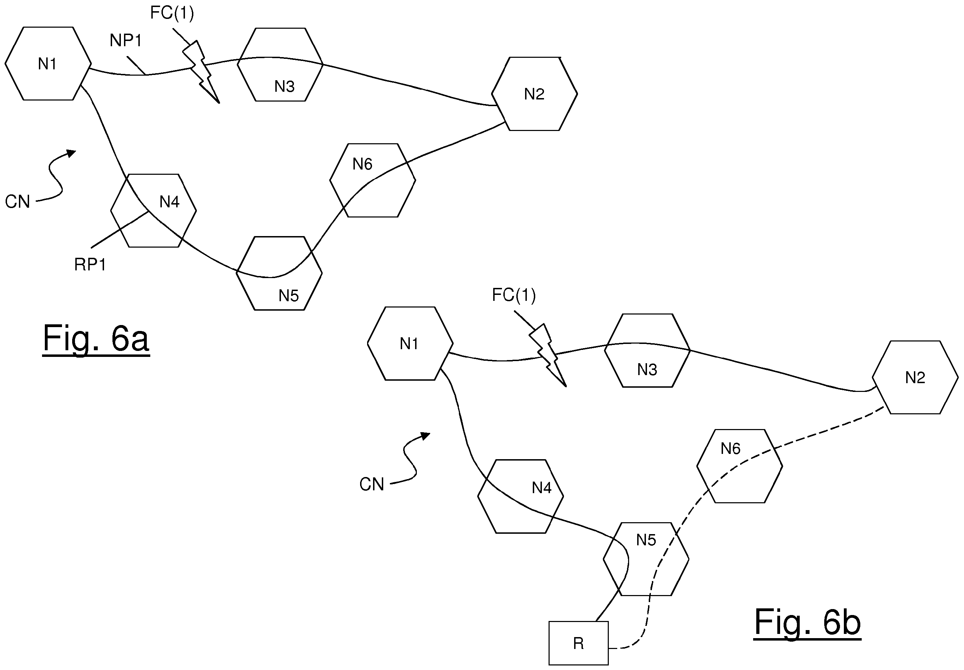

Figures 6a and 6b show an exemplary fault condition in an optical communication network CN and represent the effect of a possible intervention by a user, according to the information achievable by implementing the method described above.

The an exemplary optical communication network CN comprises six nodes N1, N2, N3, N4, N5, N6

Figure 6a show an exemplary fault condition in the optical communication network CN. It is assumed that a service demand generated at node N1 and destined to node N2 is allocated a nominal path NP1 which traverses node N3. As shown in Figure 6a, it is supposed that a failure FC(1) breaks the link between node N1 and node N3. Figure 6a also shows a restoration path RP1 computed by the path finding algorithm according to the method of the present invention. The restoration path RP1 traverses nodes N4, N5, N6.

Through fault simulation and analysis as implemented according to the method of the present invention, a user may have an indication that the restoration path RP1 is not optically feasible. In this case, as shown in Figure 6b, the user may decide to introduce in the optical communication network an optical regenerator R, for instance at node N5, able to regenerate the optical signal.

In another situation, the user may have an indication that the wavelength assigned to the restoration path RP1 is already used over one or more links along the path. For instance, the indication returned by fault simulation for the restoration path RP1 is that the wavelength has been already used over the link connecting node N6 and node N2. In this case, as described with reference to Figure 5b, the user may be presented with this indication during the analysis and may decide to introduce a regenerator R, for instance at node N5, which is able to recolor the optical signal, so that along the restoration path RP1 one wavelength is used between node N1 and node N5 (solid line) and another one may be used between node N5 and node N2 (dotted line). Alternatively, the user may decide to intervene on the optical add-drop multiplexers at the source node N1 and at the destination node N2, for instance replacing colored optical add-drop multiplexers with colorless ones, in order to be able to change the wavelength of the optical signal and use a non conflicting wavelength along the restoration path RP1.

Advantageously, the method of the present invention allows to identify in advance potential conflicts between service demands in using the network resources when restoration is applied. This permits to take into account the conflicts when dimensioning the network resources in a communication network, so that such dimensioning is optimized and allows avoiding to fail the restoration of services due to the possible misalignments between the outcomes of the design tool and the behaviour of the network in the field.

Moreover, the method of the present invention is more efficient, from the point of view of simulation time, than known methods that perform a time consuming fault simulation. Indeed, the fault simulation of the present invention is advantageously faster.

The method of the present invention is more efficient also from the point of view of selecting a simulation mode which reflects the needs and interests of an operator or a user. Indeed, a user of the communication network may not be interested in the effects of faults within the entire communication network, but he may be interested in focusing on particular links. In particular, a user may be interested in focusing his attention on links having less network resources that may be shared between different service demands and hence are more likely to cause conflicts, or on links having a high probability of failure. In other words, the user may be interested in reducing the space of the faults to be simulated to a reduced group of faults or to the faults affecting only a selected group of links. According to the method of the present invention, the fault simulation and the subsequent analysis may be advantageously flexible so as to be tailored to the needs of the operator or user, avoiding, for instance, the time consuming simulation of the effects of all the fault conditions in the communication network.

**Claims**

1. A computer-implemented method for performing a failure analysis of a communication network comprising a number of links and a number of nodes supporting transmission of a number of service demands, the method comprising performing a fault simulation (102) by:

   a) selecting (203) a failure combination, FC(1), possibly affecting said links and/or said nodes;
   b) determining (302), amongst said number of service demands, one or more broken service demands, BD(1), affected by said failure combination, FC(1), and, amongst said links, one or more broken links, BL(1), affected by said failure combination, FC(1);
   c) computing (303) a respective restoration path for each broken service demand, each of said restoration paths being computed by excluding said broken links, BL(1);
   d) amongst said broken service demands, BD(1), determining (304) whether at least two service demands have respective restoration paths that share a network resource over a conflicting link;

   and, in the affirmative:

   e) associating said shared network resource to one of said at least two service demands;
   f) removing, from said broken service demands, BD(1), said one of said at least two service demands to which said shared resource is associated and the service demands whose restoration paths do not share any network resource;
   g) adding said conflicting link to said broken links, BL(1); and
   h) repeating steps c) to g) until a termination condition is fulfilled.

2. The method according to claim 1, wherein at said step c) computation of a restoration path is performed on the basis of a number of available channels over the links of the communication network.

3. The method according to claim 2, wherein said termination condition comprises at said step d) determining that no broken service demands have respective restoration paths sharing a network resource.

4. The method according to claim 2, wherein at step e) each service demand of said at least two service demands whose restoration path is not assigned the shared network resource is put in a list of conflicting demands, CD(j), and said termination condition comprises repeating said steps c) to g) for a given number of times, N.

5. The method according to claim 2, wherein at step e) each service demand of said at least two service demands whose restoration path is not assigned the shared network resource is put in a list of conflicting demands, CD(j), and said termination condition comprises determining (306) that a difference between the number of conflicting demands, CD(j), at a current repetition of steps c) to g) and the number of conflicting demands, CD(j), at a previous repetition of steps c) to g) is higher than a threshold, ConvTh.

6. The method according to claim 4 or 5, wherein, when said termination condition is fulfilled, the method further comprises:

   a') amongst said conflicting demands, CD(j), determining (402) first conflicting service demands, CDL(k), whose computed restoration paths comprises a first conflicting link. L(k);

b') amongst said conflicting demands. CD(j), determining (402) second conflicting service demands. CDL(k), whose computed restoration paths comprises a second conflicting link L(k);

c') given a number of first available network resources over the first conflicting link, determining (403) first combinations, comb(1), of said first conflicting service demands that can be restored by using said first available network resources;

d') given a number of second available network resources over the second conflicting link, determining (403) second combinations, comb(2), of said second conflicting service demands that can be restored by using said second available network resources;

e') computing (407) selected combinations, Scomb, of conflicting service demands as a Cartesian product between said first combinations, comb(1), and said second combinations, comb(2);

f) for each selected combination, Scomb(n), determining (409) all the possible sequencings of the conflicting service demands thereof;

g') for each sequencing of conflicting service demands, computing (411) a set of restoration paths according to said sequencing.

7. The method according to any of the preceding claims, wherein said step c) further comprises assigning a wavelength to the computed restoration path and step d) comprises checking whether at least two service demands have respective restoration paths that share a wavelength over said conflicting link or over another link of the communication network.

8. The method according to any of the preceding claims, wherein said step c) further comprises checking whether the computed restoration path is optically feasible.

9. The method according to claim 8, wherein checking whether the computed restoration path is optically feasible comprises checking whether, along the computed restoration path, an optical signal to noise ratio is higher than a given minimum optical signal to noise ratio, and/or a polarization mode dispersion is lower than a given maximum polarization mode dispersion, and/or a nonlinear effect is lower than a given maximum nonlinear effect.

10. The method according to any of the preceding claims, wherein said failure combination, FC(1), is selected from a predetermined set of failure combinations and the method further comprises repeating steps a) to h) for each failure combination, FC(i), within said predetermined set of failure combinations.

11. The method according to any of the preceding claims, wherein said communication network is an optical communication network.

12. The method according to claim 11, wherein said optical communication network is a GMPLS network.

13. The method according to any of the preceding claims, the method comprising displaying at a hardware device, through a graphical user interface, information associated to the restoration paths computed at said step c).

14. The method according to claim 13, the method comprising displaying at said hardware device, through said graphical user interface, a list of links of said communication network and, upon selection of one of said links by a user, displaying a list of failure combinations that do not affect said selected link, wherein the method further comprises performing said step a) to h) for each of said displayed failure combinations.

15. A computer program product comprising computer-executable instructions for performing, when the program is run on a computer, the steps of the method according to any of the preceding claims.

**Patentansprüche**

1. Computerimplementiertes Verfahren zur Durchführung einer Fehleranalyse eines Kommunikationsnetzwerks, welches eine Reihe von Verknüpfungen und eine Reihe von Knoten, welche die Übertragung einer Reihe von Serviceanforderungen unterstützen, umfasst, wobei das Verfahren das Durchführen einer Fehlersimulation (102) durch Folgendes umfasst:

a) Auswählen (203) einer Fehlerkombination, FC(1) (*Failure Combination*), welche die Verknüpfungen und/oder die Knoten möglicherweise beeinträchtigt;

b) Bestimmen (302), aus der Reihe von Serviceanforderungen, einer oder mehrerer fehlerhafter Serviceanforderungen, BD(1) (*Broken Service Demands*), die durch die Fehlerkombination, FC(1), beeinträchtigt werden und, aus den Verknüpfungen, einer oder mehrerer fehlerhafter Verknüpfungen, BL(1) (*Broken Links*), die durch die Fehlerkombination, FC(1), beeinträchtigt werden;

c) Berechnen (303) eines entsprechenden Wiederherstellungspfades für jede fehlerhafte Serviceanforderung, wobei jeder der Wiederherstellungspfade durch das Ausschließen der fehlerhaften Verknüpfungen, BL(1), berechnet wird;

d) aus den fehlerhaften Serviceanforderungen, BD(1), Bestimmen (304), ob mindestens zwei Serviceanforderungen entsprechende Wiederherstellungspfade aufweisen, die eine Netzwerkressource über eine in Konflikt stehende Verknüpfung gemeinsam nutzen; und, wenn dies bejaht wird:

e) Assoziieren der gemeinsam genutzten Netzwerkressource mit einer der mindestens zwei Serviceanforderungen;

f) Entfernen, aus den fehlerhaften Serviceanforderungen, BD(1), der einen der mindestens zwei Serviceanforderungen, mit welcher die gemeinsam genutzte Ressource assoziiert ist, und der Serviceanforderungen, deren Wiederherstellungspfade keinerlei Netzwerkressource gemeinsam nutzen;

g) Hinzufügen der in Konflikt stehenden Verknüpfung zu den fehlerhaften Verknüpfungen, BL(1); und

h) Wiederholen der Schritte c) bis g), bis eine Abbruchbedingung erfüllt ist.

2. Verfahren nach Anspruch 1, wobei bei Schritt c) eine Berechnung eines Wiederherstellungspfades auf der Grundlage einer Reihe zur Verfügung stehender Kanäle über die Verknüpfungen des Kommunikationsnetzwerks erfolgt.

3. Verfahren nach Anspruch 2, wobei die Abbruchbedingung bei Schritt d) das Bestimmen, dass keine fehlerhaften Serviceanforderungen entsprechende Wiederherstellungspfade aufweisen, die eine Netzwerkressource gemeinsam nutzen, umfasst.

4. Verfahren nach Anspruch 2, wobei bei Schritt e) jede Serviceanforderung der mindestens zwei Serviceanforderungen, deren Wiederherstellungspfad nicht der gemeinsam genutzten Netzwerkressource zugewiesen ist, in eine Liste in Konflikt stehender Anforderungen, CD(j) (*Conflicting Demands*), aufgenommen wird, und die Abbruchbedingung das Wiederholen der Schritte c) bis g) für eine gegebene Anzahl von Malen, N (*Number of Times*), umfasst.

5. Verfahren nach Anspruch 2, wobei bei Schritt e) jede Serviceanforderung der mindestens zwei Serviceanforderungen, deren Wiederherstellungspfad nicht der gemeinsam genutzten Netzwerkressource zugewiesen ist, in eine Liste in Konflikt stehender Anforderungen, CD(j), aufgenommen wird, und die Abbruchbedingung das Bestimmen (306), dass eine Differenz zwischen der Zahl in Konflikt stehender Anforderungen, CD(j), bei einer aktuellen Wiederholung der Schritte c) bis g) und der Zahl in Konflikt stehender Anforderungen, CD(j), bei einer vorhergehenden Wiederholung der Schritte c) bis g) höher als eine Schwelle, ConvTh (*Threshold*), ist, umfasst.

6. Verfahren nach Anspruch 4 oder 5, wobei, wenn die Abbruchbedingung erfüllt wird, das Verfahren ferner Folgendes umfasst:

a') aus den in Konflikt stehenden Anforderungen, CD(j), Bestimmen (402) erster in Konflikt stehender Serviceanforderungen, CDL(k), deren berechnete Wiederherstellungspfade eine erste in Konflikt stehende Verknüpfung, L(k) (*Link*), umfassen;

b') aus den in Konflikt stehenden Anforderungen, CD(j), Bestimmen (402) zweiter in Konflikt stehender Serviceanforderungen, CDL(k), deren berechnete Wiederherstellungspfade eine zweite in Konflikt stehende Verknüpfung, L(k), umfassen;

c') unter der Voraussetzung einer Reihe erster zur Verfügung stehender Netzwerkressourcen über die erste in Konflikt stehende Verknüpfung, Bestimmen (403) erster Kombinationen, comb(1) (*Combinations*), der ersten in Konflikt stehenden Serviceanforderungen, die durch Verwendung der ersten zur Verfügung stehenden Netzwerkressourcen wiederhergestellt werden können;

d') unter der Voraussetzung einer Reihe zweiter zur Verfügung stehender Netzwerkressourcen über die zweite in Konflikte stehende Verknüpfung, Bestimmen (403) zweiter Kombinationen, comb(2), der zweiten in Konflikt stehenden Serviceanforderungen, die durch Verwendung der zweiten zur Verfügung stehenden Netzwerkressourcen wiederhergestellt werden können;

e') Berechnen (407) ausgewählter Kombinationen, Scomb (*Selected Combinations*), von in Konflikt stehenden Serviceanforderungen als ein kartesisches Produkt zwischen den ersten Kombinationen, comb(1), und den zweiten Kombinationen, comb(2);

f') für jede ausgewählte Kombination, Scomb(n), Bestimmen (409) sämtlicher möglicher Sequenzierungen der in Konflikt stehenden Serviceanforderungen davon;

g') für jede Sequenzierung in Konflikt stehender Serviceanforderungen, Berechnen (411) eines Satzes von Wiederherstellungspfaden gemäß der Sequenzierung.

7. Verfahren nach einem der vorhergehenden Ansprüche, wobei Schritt c) ferner das Zuweisen einer Wellenlänge zu dem berechneten Wiederherstellungspfad umfasst und Schritt d) das Prüfen, ob mindestens zwei Serviceanforderungen entsprechende Wiederherstellungspfade aufweisen, die eine Wellenlänge über die in Konflikt stehende Verknüpfung oder über eine andere Verknüpfung des Kommunikationsnetzwerks gemeinsam nutzen, umfasst.

8. Verfahren nach einem der vorhergehenden Ansprüche, wobei Schritt c) ferner das Prüfen, ob der berechnete Wiederherstellungspfad optisch machbar ist, umfasst.

9. Verfahren nach Anspruch 8, wobei das Prüfen, ob der berechnete Wiederherstellungspfad optisch machbar ist, das Prüfen, ob, entlang des berechneten Wiederherstellungspfads, ein optisches Signal-Rausch-Verhältnis höher als ein vorgegebenes minimales optisches Signal-Rausch-Verhältnis ist und/oder eine Polarisationsmodendispersion niedriger als eine vorgegebene maximale Polarisationsmodendispersion ist und/oder ein nichtlinearer Effekt niedriger als ein vorgegebener maximaler nichtlinearer Effekt ist, umfasst.

10. Verfahren nach einem der vorhergehenden Ansprüche, wobei die Fehlerkombination, FC(1), ausgewählt ist aus einem vorbestimmten Satz von Fehlerkombinationen und das Verfahren ferner das Wiederholen der Schritte a) bis h) für jede Fehlerkombination, FC(i), innerhalb des vorbestimmten Satzes von Fehlerkombinationen umfasst.

11. Verfahren nach einem der vorhergehenden Ansprüche, wobei das Kommunikationsnetzwerk ein optisches Kommunikationsnetzwerk ist.

12. Verfahren nach Anspruch 11, wobei das optische Kommunikationsnetzwerk ein GMPLS-Netzwerk ist.

13. Verfahren nach einem der vorhergehenden Ansprüche, wobei das Verfahren das Anzeigen, auf einem Hardwaregerät, durch eine graphische Benutzerschnittstelle, von Informationen im Zusammenhang mit den Wiederherstellungspfaden, die bei Schritt c) berechnet werden, umfasst.

14. Verfahren nach Anspruch 13, wobei das Verfahren das Anzeigen, auf dem Hardwaregerät, durch die graphische Benutzerschnittstelle, einer Liste von Verknüpfungen des Kommunikationsnetzwerks und, bei Auswahl einer der Verknüpfungen durch einen Benutzer, das Anzeigen einer Liste von Fehlerkombinationen, welche die ausgewählte Verknüpfung nicht beeinträchtigen, umfasst, wobei das Verfahren ferner das Durchführen der Schritte a) bis h) für jede der angezeigten Fehlerkombinationen umfasst.

15. Computerprogrammprodukt, welches computerausführbare Anweisungen zur Durchführung, wenn das Programm auf einem Computer ausgeführt wird, der Schritte des Verfahrens nach einem der vorhergehenden Ansprüche umfasst.

## Revendications

1. Procédé réalisé par ordinateur pour effectuer une analyse des défaillances d'un réseau de communication comprenant un certain nombre de liaisons et un certain nombre de noeuds prenant en charge la transmission d'un certain nombre de demandes de service, le procédé consistant à effectuer une simulation de panne (102) en :

   a) sélectionnant (203) une combinaison de défaillances, FC(1), affectant éventuellement lesdites liaisons et/ou lesdits noeuds ;
   b) déterminant (302), parmi ledit nombre de demandes de service, une ou plusieurs demandes de service interrompues, BD(1), affectées par ladite combinaison de défaillances, FC(1), et, parmi lesdites liaisons, une ou plusieurs liaisons interrompues, BL(1), affectées par ladite combinaison de défaillances, FC(1) ;
   c) calculant (303) un chemin de restauration respectif pour chaque demande de service interrompue, chacun desdits chemins de restauration étant calculé en excluant lesdites liaisons interrompues, BL(1) ;
   d) parmi lesdites demandes de service interrompues, BD(1), déterminant (304) si au moins deux demandes de service ont des chemins de restauration respectifs qui partagent une ressource de réseau sur une liaison en conflit ;

et, dans l'affirmative :

e) associant ladite ressource de réseau partagée à l'une desdites au moins deux demandes de service ;
f) supprimant, parmi lesdites demandes de service interrompues, BD(1), ladite demande parmi les dites au moins deux demandes de service à laquelle ladite ressource partagée est associée et les demandes de service dont les chemins de restauration ne partagent aucune ressource de réseau ;
g) ajoutant ladite liaison en conflit auxdites liaisons interrompues, BL(1) ; et
h) répétant les étapes c) à g) jusqu'à ce qu'une condition de terminaison soit remplie.

2. Procédé selon la revendication 1, dans lequel, à ladite étape c), le calcul d'un chemin de restauration est effectué sur la base d'un nombre de canaux disponibles sur les liaisons du réseau de communication.

3. Procédé selon la revendication 2, dans lequel ladite condition de terminaison comprend, à ladite étape d), la détermination du fait qu'aucune demande de service interrompue ne comporte de chemins de restauration respectifs partageant une ressource de réseau.

4. Procédé selon la revendication 2, dans lequel, à l'étape e), chaque demande de service desdites au moins deux demandes de service pour laquelle la ressource de réseau partagée n'est pas attribuée au chemin de restauration, est placée dans une liste de demandes en conflit, CD(j), et ladite condition de terminaison comprend la répétition desdites étapes c) à g) pour un nombre N donné de fois.

5. Procédé selon la revendication 2, dans lequel, à l'étape e), chaque demande de service desdites au moins deux demandes de service pour laquelle la ressource de réseau partagée n'est pas attribuée au chemin de restauration, est placée dans une liste de demandes en conflit, CD(j), et ladite condition de terminaison comprend la détermination (306) du fait qu'une différence entre le nombre de demandes en conflit, CD(j), lors d'une répétition en cours des étapes c) à g) et le nombre de demandes en conflit, CD(j), au cours d'une précédente répétition des étapes c) à g) est supérieure à un seuil, ConvTh.

6. Procédé selon la revendication 4 ou 5, dans lequel, lorsque ladite condition de terminaison est remplie, le procédé comprend en outre les étapes consistant à :

a') parmi lesdites demandes en conflit, CD(j), déterminer (402) des premières demandes de service en conflit, CDL(k), dont les chemins de restauration calculés comprennent une première liaison en conflit, L(k) ;
b') parmi lesdites demandes en conflit, CD(j), déterminer (402) des secondes demandes de service en conflit, CDL(k), dont les chemins de restauration calculés comprennent une seconde liaison en conflit, L(k) ;
c') étant donné un certain nombre de premières ressources de réseau disponibles sur la première liaison en conflit, déterminer (403) les premières combinaisons, comb(1), desdites premières demandes de service en conflit pouvant être restaurées en utilisant lesdites premières ressources de réseau disponibles ;
d') étant donné un certain nombre de secondes ressources de réseau disponibles sur la seconde liaison en conflit, déterminer (403) les secondes combinaisons, comb(2), desdites secondes demandes de service en conflit pouvant être restaurées en utilisant lesdites secondes ressources de réseau disponibles ;
e') calculer (407) des combinaisons sélectionnées, Scomb, de demandes de service en conflit en tant que produit cartésien entre lesdites premières combinaisons, comb(1), et lesdites secondes combinaisons, comb(2) ;
f') pour chaque combinaison sélectionnée, Scomb(n), déterminer (409) tous les séquençages possibles des demandes de service en conflit de celle-ci ;
g') pour chaque séquençage de demandes de service en conflit, calculer (411) un ensemble de chemins de restauration en fonction dudit séquençage.

7. Procédé selon l'une quelconque des revendications précédentes, dans lequel ladite étape c) comprend en outre l'attribution d'une longueur d'onde au chemin de restauration calculé et l'étape d) comprend la vérification du fait de savoir si au moins deux demandes de service ont des chemins de restauration respectifs qui partagent une longueur d'onde sur ladite liaison en conflit ou sur une autre liaison du réseau de communication.

8. Procédé selon l'une quelconque des revendications précédentes, dans lequel ladite étape c) comprend en outre l'étape consistant à vérifier si le chemin de restauration calculé est optiquement réalisable ou non.

9. Procédé selon la revendication 8, dans lequel le fait de vérifier si le chemin de restauration calculé est optiquement réalisable ou non, consiste à vérifier si, le long du chemin de restauration calculé, un rapport signal sur bruit optique est supérieur à un rapport signal sur bruit optique minimal donné et/ou si une dispersion de mode de polarisation est inférieure à une dispersion maximale donnée du mode de polarisation et/ou si un effet non linéaire est inférieur à un effet non linéaire maximal donné.

**10.** Procédé selon l'une quelconque des revendications précédentes, dans lequel ladite combinaison de défaillances, FC(1), est sélectionnée parmi un ensemble prédéterminé de combinaisons de défaillances et le procédé comprend en outre la répétition des étapes a) à h) pour chaque combinaison de défaillances, FC(i), à l'intérieur dudit ensemble prédéterminé de combinaisons de défaillances.

**11.** Procédé selon l'une quelconque des revendications précédentes, dans lequel ledit réseau de communication est un réseau de communication optique.

**12.** Procédé selon la revendication 11, dans lequel ledit réseau de communication optique est un réseau GMPLS.

**13.** Procédé selon l'une quelconque des revendications précédentes, le procédé consistant à afficher sur un dispositif matériel, par l'intermédiaire d'une interface utilisateur graphique, des informations associées aux chemins de restauration calculés à ladite étape c).

**14.** Procédé selon la revendication 13, le procédé consistant à afficher sur ledit dispositif matériel, par l'intermédiaire de ladite interface utilisateur graphique, une liste de liaisons dudit réseau de communication et, lors de la sélection de l'une desdites liaisons par un utilisateur, à afficher une liste de combinaisons de défaillances n'affectant pas ladite liaison sélectionnée, dans lequel le procédé comprend en outre la réalisation desdites étapes a) à h) pour chacune desdites combinaisons de défaillances affichées.

**15.** Progiciel informatique comprenant des instructions exécutables par ordinateur pour mettre en oeuvre, lorsque le programme est exécuté sur un ordinateur, les étapes du procédé selon l'une quelconque des revendications précédentes.

```
                        ┌──────────┐
                        │  start   │
                        └──────────┘
                             │
                             ▼
              ┌─────────────────────────────┐      101
              │      network design         │─────
              └─────────────────────────────┘
                             │
                             ▼
              ┌─────────────────────────────┐      102
              │      fault simulation       │─────
              └─────────────────────────────┘
                             │
                             ▼
  ┌───────────────────────────────────────────────────────────┐      103
  │ analysis of simulation results and determination about if and where │─────
  │ to allocate additional network resources or modify nominal resources │
  └───────────────────────────────────────────────────────────┘
                             │
                             ▼
              ┌─────────────────────────────┐      104
              │  deployment of network resources │─────
              └─────────────────────────────┘
                             │
                             ▼
                        ┌──────────┐
                        │   end    │
                        └──────────┘
```

Fig. 1

Fig. 2

EP 2 814 203 B1

```
                    ┌─────────┐
                    │  start  │
                    └────┬────┘
                         │          ___ 301
                    ┌────▼────┐   /
                    │   j=1   │
                    └────┬────┘
                         │
       ┌─────────────────▼─────────────────┐   ___ 302
       │      determine BD(1) and BL(1)     │ /
       └─────────────────┬─────────────────┘
                         │
 303   ┌─────────────────▼─────────────────┐◄─────────────────┐
   \   │        compute restorations        │                  │
       └─────────────────┬─────────────────┘                  │
                         │                                      │
 304   ┌─────────────────▼─────────────────┐                  │
   \   │      determine CD(j) and CL(j)     │                  │
       └─────────────────┬─────────────────┘                  │
                         │              305                    │
                         │            /                        │
             y     ◄─────▼─────◄                                │
         ┌────────◆ CD(j)={} or CL(j)={}? ◆                    │
         │         ◄─────┬─────◄            ___ 308            │
         │               │ n              /                    │
         │     306       │     ┌──────────────────────┐        │
         │       \       │     │ BL(j)=BL(j-1)+CL(j-1) │        │
         │    ◄──────────▼──◄  │    BD(j)=CD(j-1)       │       │
         │   ◆  j>N or        ◆─────────────┬──────────┘        │
         │   ◆ (CD(j)-BD(j))>ConvTh? ◆  n   │                   │
         │    ◄──────────┬──◄               │        ___ 307   │
         │               │ y                │     ┌────▼───┐   │
         │     ┌─────────▼─────────┐        └─────│ j=j+1  ├───┘
         │     │ force termination │              └────────┘
         │     └─────────┬─────────┘   ___ 309
         │               │            /
         │          ┌────▼────┐
         └─────────►│   end   │
                    └─────────┘
```

Fig. 3

Fig. 4

EP 2 814 203 B1

+--link 253

+--fault 6

+--demand 23

+--demand 35

+--demand 56

+--fault 9

+--fault 12

+--link 13

**Fig. 5b**

+--fault 6

+--step 1

+--demand 35

+--demand 49

+--demand 99

+--link 143

+--link 253

+--link 658

+--step 2

+--step 3

+--fault 9

+--step 1

**Fig. 5a**

EP 2 814 203 B1

Fig. 6a

Fig. 6b

**EP 2 814 203 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7564805 B1

- US 5787271 A

**Non-patent literature cited in the description**

- **CHEN I. et al.** Reliable strict quality-of-service with unreserved backup paths. *Advanced Networking and Applications, 2007, AINA'2007, 21st International Conference on, IEEE,* 01 May 2007, 948-955